# EUROPEAN PATENT SPECIFICATION

(11) **EP 4 420 341 B1**
(45) Date of publication and mention of the grant of the patent: **14.10.2026**
(21) Application number: 22912476.3
(22) Date of filing: 22.12.2022
(51) Int. Cl.: H04M 3/51, H04M 3/523, H04M 7/00, H04Q 3/64, H04M 3/58

(54) **TECHNIQUES FOR OPTIMIZING ASSISTANCE CHANNEL ROUTING**
VERFAHREN ZUR OPTIMIERUNG VON HILFSKANALROUTING
TECHNIQUES D'OPTIMISATION DE ROUTAGE DE CANAL D'ASSISTANCE

(30) Priority: 22.12.2021 US 202163292684 P
(43) Date of publication of application: 28.08.2024
(60) Divisional application: 26193733.8 / 4 823 110
(73) Proprietor: Afiniti AI Limited, Dublin D02 PY28 (IE)
(72) Inventor: GARCIA-LOPEZ, Julian, Lopez-Portillo, Hamilton, HM 11 (BM); O'BRIEN, Caroline, Cecilia, Hamilton, HM 12 (BM); SINHA, Alekshandra, Arjun, Hamilton, HM 11 (BM); DUJOL, Felix Xavier Soliman, Marie, London SW 1P 4QP (GB)
(74) Representative: Black, Diego
(86) International application number: PCT/US2022/053782
(87) International publication number: WO 2023/122256

(56) References cited:
- US-A1- 2007 061 468
- US-A1- 2014 126 708
- US-A1- 2015 117 631
- US-A1- 2016 227 035
- US-A1- 2018 077 254
- US-A1- 2018 190 291
- US-A1- 2021 136 212

## Description

### CROSS-REFERENCE TO RELATED APPLICATION

This international patent application claims priority to U.S. Provisional Application No. 63/292,684, filed December 22,

### FIELD OF THE DISCLOSURE

The present disclosure generally relates to methods and systems for resource allocation among channels and, more particularly, to techniques for improving the intelligence, efficiency, distribution, routing, prioritization, and/or otherwise optimization of resource allocation among web and/or telecommunication channels regarding website and/or contact center traffic, visitors, load, and/or resources.

### BACKGROUND OF THE DISCLOSURE

Conventional techniques that attempt to provide assistance from service provider agents to website visitors are coarse and ineffective. For example, a service provider's website may include a permanent "Chat with Us" or "Call Us" element via which a user visiting the website in need of assistance may attempt to reach an agent. Unhelpfully, this element may be displayed on the website at all times of day, irrespective of whether any agents are, in fact, available (according to schedule or otherwise) at the service provider to provide assistance to the user. Similarly, this displayed element may be displayed indiscriminately to many users without any analysis.

Such user experience patterns may lead to a series of bad customer service outcomes for users who attempt to call in, such as encountering a, "We're closed," after-hours telephone message, or a long wait on hold, only to be informed by the agent who ultimately answers the call that the user has been routed to an incorrect department that does not provide the assistance that the user needs, an error message, etc. Thus, conventional techniques result in substantial user frustration and are wasteful of the service provider's limited resources by, for example, consuming those scarce telephony resources, such as telecommunication connections, bandwidth, processor, telecommunication systems memory, and/or related servers. Such waste may also prevent other users who could have accessed (*e.g*., would been helped from accessing) the service provider's telephony and/or related systems, such as related web systems.

Some conventional systems attempt to address some of the aforementioned issues by providing users with phone numbers to call for assistance based on the user's present web page. However, such systems are inadequate, at least because (1) a current webpage of the user is not consistently indicative of the user's need, and (2) the systems still answer/respond to all contacts in a chronological first-in-first-out (FIFO) or round-robin order, regardless of whether or not the contact interacted with the webpage, and thus these systems lack efficiency, intelligence and prioritization. Further, in conventional systems, contact data only becomes associated with website tracking data after the contact is already on the phone with an agent.

Still further, traditional contact-agent pairing systems may implement a performance-based routing (PBR) strategy for prioritizing higher-performing agents for assignment to a contact. Under PBR, for example, the highest-performing agent among available agents receives the next available task (*i.e*., the next contact's call). A PBR strategy, however, may stall lower performing agents who may sit idle wasting telecommunication connections and/or system resources, *e.g*., processor and/or memory resources.

The patent publications US 2018/190291 and US 2007/061468 are examples of background art.

Thus, there is a need for techniques for improved techniques that increase the intelligence, efficiency and prioritization by which visitors are routed between assisted and unassisted channels.

### SUMMARY OF THE DISCLOSURE

The invention is defined according to the appended independent claims. The dependent claims define preferred embodiments.

In one aspect, a web-based computer-implemented method is disclosed for optimizing assistance channel routing. The method includes obtaining contact connection data associated with a contact at a first time, wherein the contact connection data comprises activity of the contact on an unassisted channel of a service provider; obtaining initial activity data associated with the contact interacting with the unassisted channel of the service provider, wherein the initial activity data comprises at least one of: i) information about the contact during a predetermined period of time after the first time; or ii) a number of interactions of the contact on the unassisted channel; obtaining agent data associated with a plurality of agents at a contact center system associated with the service provider; determining whether to (a) direct the contact to at least one assisted channel of the service provider, or (b) maintain the contact on the unassisted channel of the service provider, the determining based on the initial activity data and the agent data; based on determining to direct the contact to the at least one assisted channel of the service provider, transmitting an electronic notification to a personal device of the contact; after transmitting the notification to the contact, obtaining a request from a personal device to establish an agent connection to the contact center system; and pairing, based on the request, a personal device of the contact to the contact center system, wherein the pairing establishes a communication between an agent of the plurality of agents and the contact.

In another aspect, a computer-implemented method is disclosed regarding multiple connections. The method includes obtaining an indication of a first connection of a first contact to an unassisted channel of a service provider; determining first initial activity data as collected for the first contact as the first contact interacts with the unassisted channel; obtaining an indication of a second connection of a second contact to the unassisted channel of the service provider; determining second initial activity data as collected for the second contact as the second contact interacts with the unassisted channel; determining that one or more agent connections are available to agents at an assisted channel of the service provider; determining (a) to divert at least one of the first contact or the second contact to the assisted channel as one or more diverted contacts, and (b) to maintain a remainder of the first contact or the second contact on the unassisted channel, based on the first initial activity data and the second initial activity data; and diverting the one or more diverted contacts to the assisted channel by providing the one or more agent connections to the one or more diverted contacts.

In accordance with the above, and with the disclosure herein, the present disclosure includes improvements in underlying computer functionality or in improvements to other technologies at least because the present disclosure includes, *e.g*., optimizing telecommunication connections or computing resources (*e.g*., memory, bandwidth and/or processor resources) of a call center comprising computing systems, such as a call processing system, in the field of call center routing, distribution, and/or management. That is, the present disclosure describes improvements in the functioning of an underlying computing system itself or "any other technology or technical field" because a call center, and its underlying call processing system, are improved by allowing the call center, and related resources, such as telecommunications connections allocated in the call center system (*e.g*., telecommunications connections between an agent and a caller) to be routed or established by choosing connections in an optimal manner. This provides an improvement over prior systems that do not implement such channel and/or connection optimizations solutions as described herein. For example, this improves over the prior art at least because the optimized systems and methods herein allow the systems and methods to operate even with limited or reduced resources (*e.g*., limited or fewer telecommunication connections and/or limited or reduced processing or memory utilization of a call processing system) compared with non-optimizing systems. For example, by implementation of the systems and methods described herein, fewer contacts (*e.g*., 2 contacts) may be allocated to the call center thereby reducing computing resources (*e.g*., telecommunication connects, memory, processing resources), where more contacts (*e.g*., 3 contacts) are otherwise available and could have been allocated to the call center, but were not, based on the decision and optimization provided by the systems and methods herein.

Additionally or alternatively, the present disclosure relates to improvements to other technologies or technical fields at least because an unassisted channel (*e.g*., a website) can also operate using limited or fewer resources (*e.g*., reduced web-based connections, and reduced usage of server processor(s) and/or memory) by moving contacts to an assisted channel (*e.g*., a contact center) based on the decision and optimization provided by the systems and methods herein. Still further, the systems and methods herein provide a balanced or distributed implementation to spread resource utilization across the assisted and unassisted channel(s). In some aspects, the balanced or distributed implementation may be configurable or adaptable (*e.g*., in real-time or near-real time) to manage resources, distribution, routing, load, or otherwise operation of the underlying systems and/or methods, *e.g.*, including during operation.

In addition, the present disclosure includes the application of or use of a particular machine, *e.g*., one or more switches as deployed in a contact center, call center, or otherwise associated with a service provider, where the switch is controlled by the systems and methods for optimizing assistance channel(s) as described herein.

Still further, the present disclosure includes specific features other than what is well-understood, routine, conventional activity in the field, because such features add unconventional steps that confine the disclosure to a particular useful application, *e.g*., a computer-implemented systems and methods for optimizing assistance channel routing.

Advantages will become more apparent to those of ordinary skill in the art from the following description of the preferred aspects which have been shown and described by way of illustration. As will be realized, the present aspects may be capable of other and different aspects, and their details are capable of modification in various respects. Accordingly, the drawings and description are to be regarded as illustrative in nature and not as restrictive.

The present disclosure will now be described in more detail with reference to particular aspects thereof as shown in the accompanying drawings. While the present disclosure is described below with reference to particular aspects, it should be understood that the present disclosure is not limited thereto. Those of ordinary skill in the art having access to the teachings herein will recognize additional implementations, modifications, and aspects, as well as other fields of use, which are within the scope of the present disclosure as described herein, and with respect to which the present disclosure may be of significant utility.

### BRIEF DESCRIPTION OF THE DRAWINGS

To facilitate a fuller understanding of the present disclosure, reference is now made to the accompanying drawings, in which like elements are referenced with like numerals. These drawings should not be construed as limiting the present disclosure, but are intended to be illustrative only.
FIG. 1A depicts an exemplary computing environment for constructing models for use in implementing channel monitoring and routing in accordance with the present disclosure.
FIG. 1B depicts implementing channel monitoring and routing within the computing environment of Figure 1A.
FIG. 2A depicts a simplified example of tracking contacts in a channel monitoring and routing system in accordance with the present disclosure.
FIG. 2B depicts exemplary contact data at time=1 in accordance with FIG. 2A and the present disclosure.
FIG. 2C depicts exemplary contact data at time=2 in accordance with FIGs. 2A-2B and the present disclosure.
FIG. 2D depicts exemplary contact data at time=3 in accordance with FIGs. 2A-2C and the present disclosure.
FIG. 2E depicts exemplary contact data at time=4 in accordance with FIGs. 2A-2D and the present disclosure.
FIGs. 2F-2H depict exemplary allocation matrices in accordance with FIGs. 2A-2E and the present disclosure.
FIG. 3 depicts a control flow diagram associated with facilitating certain functionalities in accordance with the present disclosure.
FIG. 4A depicts a flow diagram of an exemplary computing environment for constructing models for use in implementing optimized assistance channel routing in accordance with the present disclosure.
FIG. 4B depicts a flow diagram of a web-based computer-implemented method for optimizing assistance channel routing according to aspects of the present disclosure.

### DETAILED DESCRIPTION

As referred to herein, telecommunication includes both audio and written electronic communication. The present disclosure generally relates to improving the intelligence, efficiency, distribution, routing, prioritization, and/or otherwise optimization of web and/or telecommunication channels regarding website and/or contact center traffic, visitors, load, and/or resources. This may comprise tracking multiple contacts (*e.g*., users) at an unassisted channel, e.g., a website, that is associated with a contact center system; for example, the tracking is performed by a channel monitoring system associated with both the website and the contact center system (also referred to herein as a channel monitoring and allocation runtime system). For example, each contact may be received at a website associated with the channel monitoring system; the present disclosure provides for postponing determining whether to divert the contact for a threshold period of time. During the threshold period of time, the channel monitoring system may obtain information about the contact. After the threshold period of time and if the contact is still accessing the website, the channel monitoring system may continue to obtain information about the contact and determine whether to divert the contact to an assisted channel. For example, the channel monitoring system i) may determine one or more performance measurements such as conversion rates (*e.g*., a probability that the contact will make a purchase), revenue, satisfaction, or as otherwise discussed herein corresponding to the contact, ii) may determine one or more transfer rates (*e.g*., a probability that the contact will call an agent for help, as opposed to the probability that the contact will simply remain on the website without making a call) corresponding to the contact, or iii) otherwise may determine that the contact will complete or finalize a telecommunication connection (*e.g*., based on completing a sale, transaction, call resolution), or the like.

The channel monitoring system may attempt to divert the contact between (i) an unassisted channel of the channel monitoring system (*e.g*., a website or an artificial-intelligence guide/chat) and/or (ii) an assisted channel (*e.g*., a telephone call between the contact and an agent at the contact center). In some cases, the contact center may associate the contact with one or both of (i) an unassisted channel performance measurement (*e.g*., a purchase conversion rate at the website) and (ii) an assisted channel performance measurement (*e.g*., a presumed purchase conversion rate if the contact were talking to an agent via telephone). In some cases, the contact center may associate the contact with one or both of (i) an unprompted transfer rate (*i.e*., a probability that the contact will call an agent of their own initiative) and/or (ii) a prompted transfer rate (*i.e*., a probability that the contact will call an agent after receiving a notification prompting the contact to call the contact center). The present techniques may include computing transfer rates, conversion rates, and the like, via a software library located in, or available to, a client computing device of a contact (*e.g*., a mobile device of a website contact) and/or a remote computing device communicatively coupled to the client computing device. The software library may include instructions (*e.g.*, JavaScript, browser libraries, etc.) that, when executed, compute one more values, *e.g*., in some aspects with machine learning (ML) models. Such one or more values may be stored in the software library or client-side web stack. The values computed, *e.g*., by the ML model(s), may be transmitted to a remote server or cloud-based platform, where a solver program or otherwise software may execute or analyze the values or otherwise related information (*e.g*., to determine whether to deflect or otherwise transition, route, or distribute a contact away from the website to a call center).

The present techniques may track a plurality of contacts visiting the website, or a group of associated websites, simultaneously. For example, the channel monitoring system may create models (e.g., models represented as matrices) to model or determine a cumulative performance metric (*e.g*., a total profit for all contact purchases based on expected conversion rates of the tracked contacts) for various combinations of contacts at the assisted and unassisted channels. The channel monitoring system may determine comparative advantage for assisting the plurality of contacts in different temporal orderings and/or via different respective agents. For example, the system may compute the comparative advantage between (i) a first contact being assisted by an agent and a second contact being left on the website; and (ii) the first contact being left on the website and the second contact being assisted by an agent. Comparative advantage may be determined by analyzing one or more criteria, including respective performance metrics including respective conversion rates, respective transfer rates, agent availability at the contact center, hardware availability, and/or resource utilization and/or optimization of the underlying system (*e.g*., offloading or routing between unassisted channels, between assisted channels, and/or between unassisted channels and assisted channels), etc. Upon determining a comparative advantage, the present techniques may cause one or more prompts to be displayed to selected contacts that include respective call-in information (*e.g*., a notification including a phone number or other contact information of an agent).

The present techniques are adaptable for determining whether to prompt an individual contact to call in, and/or for optimizing multiple channel resources for a contact center.

Thus, the present disclosure provides new and useful analysis for building efficiency, intelligence, and priority to contacts; this contrasts with conventional systems, which do not even contemplate the basic prerequisite information discussed in the present disclosure. Moreover, conventional systems operate without regard to whether a contact center system is better served by maintaining a contact at a web-based channel or prompting the contact to receive telephonic assistance; accordingly, conventional systems may direct a user well-suited for a web channel to a telephone channel, or *vice versa*. This approach wastes system resources where users (contacts) attempt to navigate the call and/or web system in an ineffective manner, thereby over-utilizing system resources. In sum, conventional techniques result in mis-assigning users, flooding call centers with calls in a chronological order, without regard to other factors such as caller identity, caller issue, resource utilization, etc. and generally, wasting time and resources of the agent, the service provider, and the user, and, as a result, the underlying computing system(s) on which the call center and/or web channel operates.

From a sales perspective, organizations present many sales channels to consumers in an effort to capture as many diverse customer segments as possible. However, the different adoption times of each sales channel has resulted in each channel being run in isolation by separate business functions. Conventional techniques treat sales channels as orthogonal to each other, and this is a clear inefficiency in conventional techniques, *i.e*., unifying the data streams from disparate systems in aged and underfunded telephony environments is more challenging than interfacing with a dynamic web environment.

### Exemplary Channel Optimization Modeling Framework System

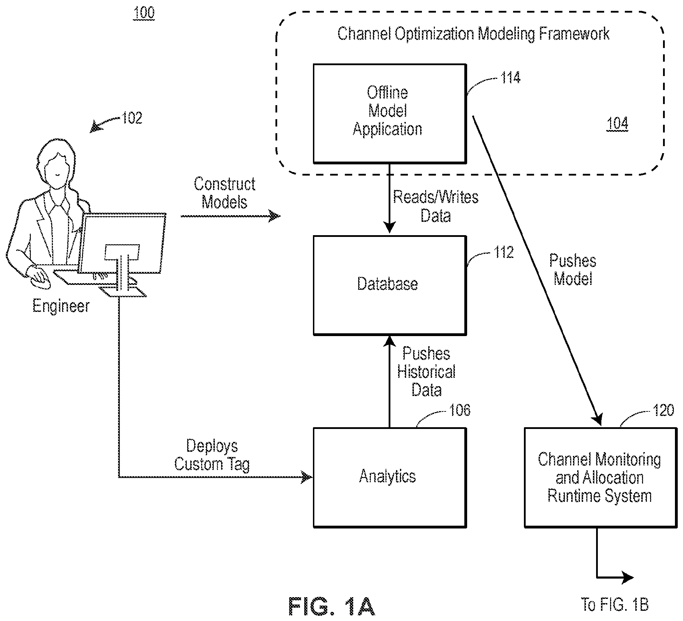

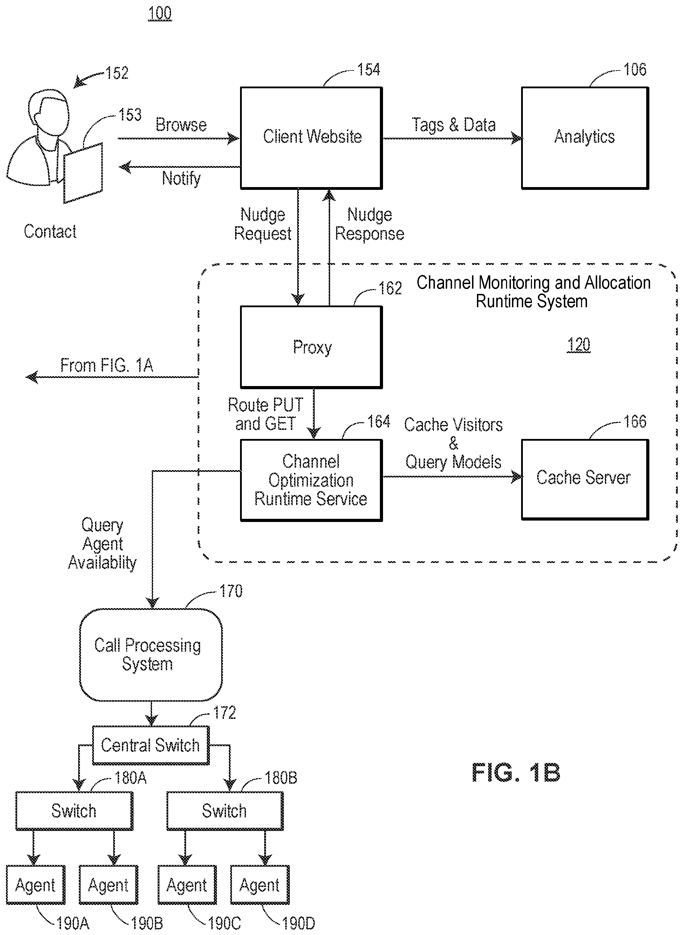

FIG. 1A depicts an exemplary computing environment 100 for constructing models for use in implementing optimized assistance channel monitoring and allocating, in accordance with the present disclosure. In some aspects, the environment 100 may correspond to an offline system context for constructing models for use in the environment 100 of FIG. 1B, below.

The environment 100 may be interactive and allow an employee 102 (*e.g*., an engineer) of the proprietor to at least partially interact with the present techniques. The employee 102 may access a channel monitoring and allocation modeling framework 104,an analytics system 106 to, respectively, construct models and deploy tracking tags. The functioning of the analytics system 106 during runtime operations is discussed, below, with respect to FIG. 1B. The channel monitoring and allocation modeling framework 104 includes an offline model application 114. It is to be understood that, additionally or alternatively, the tasks, as performed by employee 102 as described herein, may be partially or fully automated within environment 100, such as by a computing instructions that may build and/or update journey application 110 for operation as described herein.

In the example of FIG. 1A, the journey application 110 enables the employee 102 to construct and deploy a contact journey model. The journey application 110 may be implemented in a Python container. The journey application 110 may include instructions for generating a contact journey, which is a series of graphical user interface screens that the contact views. For example, the instructions may analyze real-time current journey information (*e.g.*, session ID, tags, etc.) from Google Analytics or another analytics platform (*e.g*., ContentSquare, ClickTale, etc.). The instructions may pull an interaction history of a contact using a website by analyzing a cookie and/or by joining to contact center data and/or historical outcome data to understand the impact of augmentation of the contact's web journey on sales outcomes. The instructions may include retrieving interaction histories to identify similar contacts by leveraging cloud data (*e.g*., Google BigQuery) to create journeys of historical contacts. The offline model application 114 may model a contact's path through the web, identifying key drivers of abandonment (*i.e*., non-sale outcomes, non-call ins, call competition/telecommunication completion, etc.). Aspects of the offline model application 114 may include one or more ML models that compute values (*e.g*., performance metrics, conversion rates, transfer rates, etc.) as discussed below.

The database 112 processes web data and may store data. In some aspects, the database may join the web data to contact center data, and may store the result set of the join as modeling data. For example, the database may be implemented as a Greenplum container. In some aspects and for some contexts, additional information may be stored. For example, in a contact center context, the database 112 may also store information about the time a call started, the time a call ended, the phone number dialed, and the caller's phone number. The database 112 may receive data from the offline model application 114. The database 112 may include historical assignment information.

The offline model application 114 further allows the employee 102 to build and deploy channel monitoring and allocation models. The offline model application 114 pushes data to the database 112 and pushes models to a channel monitoring and allocation runtime system 120, which is described in detail with respect to FIG. 1B below. In some examples, aspects of the channel monitoring and allocation runtime system 120 (*e.g.*, the offline model application 114) may be configured to be executed in the software library of a personal device of a contact (*e.g*., in a JavaScript interpreter of the contact's browser).

The offline model application 114 may generate one or more predictions per contact, including, for example: 1) expected website revenue; 2) expected call-in revenue; 3) expected transfer rate with a popup/ notification; 4) expected transfer rate without a popup/ notification. Other predictions are also contemplated, for example, telecommunications connection utilization time, resource utilization time, performance metrics for the contact and/or the contact center system, and the like. The offline model application 114 may create optimization metrics that express the share of performance metric/expected revenue/ transfer rate/resource utilization across the contact journey from the Bellman equation, and may output four ML models corresponding, respectively, to each of the above predictions to be used at runtime. In some examples, a single ML model optimizes for all of the four predictions above. Specifically, in one aspect, the offline model application 114 may be divided into two sections: 1) an R data script to process clicks/outcome data and to generate the training set used in the offline model; and 2) a Python script to preprocess and create a model to be deployed into production. The R script may pull clicks/outcomes data from the database 112 (*e.g*., the identifiers and cookies columns). Each record in the click table may represent a tracked action, such that for example, if a contact clicked on three pages, the contact session would have three records associated with the contact identifier. If the contact completes a purchase, the offline model application 114 may record this outcome in a historical outcome data table.

For example, the offline model application 114 may clean the loaded data and compute one or more expectation values by computing two continuous metrics such as "reward" (*i.e*., the expected revenue from a contact purchase) and "issale_reward" (*i.e*., the discounted expected revenue after accounting for a contact's current pathway). These metrics express the expected reward across the contact journey using the Bellman equation, and multiply a discount factor by the product price or "issale" column to obtain values for the "reward" and "issale_reward" metrics, respectively, or other metrics. The discount factor, at a record level, is given by the following: 0.99^{(total_number_of_clicks - current-click)} where the exponent represents the number of contact interaction events to an expected conclusion of the session. This provides a discount factor equal to 1 for the last click and with a common ratio equal to 0.99. In another example, the metrics may be binary or discrete metrics.

The offline model application 114 may analyze the historical information in the database 112 to monitor, store, retrieve, and/or output task-agent pairings that have already been made. For example, the offline model application 114 may monitor pair assignments to collect information about pairings in a given period. Each record of a historical pairing assignment may include information such as an agent identifier, pairing type identifier, offer identifier, outcome information, or a pairing strategy identifier (*i.e*., an identifier indicating whether a pairing was made using a behavioral pairing (BP) strategy, or some other pairing strategy such as a first-in first-out (FIFO) or performance based routing (PBR) pairing strategy).

The offline model application 114 may generate a pairing model or a similar computer processor-generated model based on a set of historical pairings for a period of time (*e.g*., the past week, the past month, the past year, etc.). The channel monitoring and allocation runtime system 120 may use the generated model to make pairing or otherwise mapping/contact diversion recommendations.

The offline model application 114 may compute benchmarks describing the relative performance of two or more pairing strategies (*e.g*., FIFO, PBR, BP, etc.) using historical pairing information, which may be received from, for example, the database 112. The offline model application 114 may perform other functions, such as establishing a benchmarking schedule for cycling among various pairing strategies, tracking cohorts (*e.g*., base and measurement groups of historical pairings), etc. Benchmarking is described in detail for the contact center context in, *e.g*., U.S. Patent No. 9,712,676, which is hereby incorporated by reference herein.

In some aspects, the offline model application 114 may output or otherwise report or use the relative performance measurements. The relative performance measurements may be used to assess the quality of a pairing strategy to determine, for example, whether a different pairing strategy (or a different pairing model) should be used, or to measure the overall performance (or performance gain) that was achieved within the system while it was optimized or otherwise configured to use one pairing strategy instead of another. Optimization may be based on one or more variables or factors such as resource utilization (*e.g*., processor, memory, and/or telecommunication connections), revenue, cost, customer satisfaction, priority, time, skill, or as otherwise discussed herein.

In operation, the employee 102, or otherwise automated script, constructs one or more models by accessing the channel monitoring and allocation modeling framework 104. Part of the model construction process may include selecting one or more parameters within the journey application. The employee 102 may submit the parameters, at which time the offline model application 114 may read and write data from/to the database 112 and generate, via one or more processors, the contact journey model. The contact journey model may be retrieved by the offline model application 114 and deployed to the channel monitoring and allocation runtime system 120, whereupon the model will be executed (*e.g*., via JavaScript in the contact's browser) in relation to contact activity (*e.g.*, when a contact visits a particular website). The employee 102 may use the channel optimization modeling framework 104 to clone, update, modify, delete, and create a virtually unlimited number of models. While the foregoing examples describe the ML models being executed in the JavaScript interpreter of the contact's browser, it will be appreciated by those of ordinary skill in the art that the models may be created and trained in a server-side environment, and as such, in some aspects, the ML model(s) may be executed on the server-side. For example, instead of click data being analyzed in the browser of the contact, the click data may be transmitted to a remote computation server for processing. Those of ordinary skill in the art will also appreciate that distributing the computation of the high number of contact interaction events generated by multiple contacts visiting potentially many client websites at a time to local devices of those respective contacts, rather than a central computation server, represents a significant improvement over conventional techniques and enables the present techniques to scale horizontally.

### Exemplary Channel monitoring and allocation runtime system

FIG. 1B depicts implementing optimized assistance channel routing within the computing environment 100 of FIG. 1A, in accordance with the present disclosure. The environment 100 includes a contact 152 (*e.g*., a user, a shopper, a customer, etc.), utilizing one or more personal devices (*e.g*., personal device 153) in communication with a website 154. For example, the contact may access the website via any suitable means (*e.g*., a mobile computing device, a desktop computer, a laptop computer, a wearable device, a speech-to-text interface, etc.). The website 154 may be any website, such as an enterprise client of the proprietor of the present techniques engaged in the selling of goods or services. The website 154 may include graphical user interface features that enable the contact 152 to shop for good and/or services sold by the enterprise.

For example, the environment 100 may be included in, or communicatively coupled to, a contact center system or incorporated in a component or module (*e.g*., a pairing module) of a system for helping to assign tasks (*e.g*., contacts) among various agents. Herein, "pairing" may refer to matching, assigning, routing, etc. of one or more incoming contacts 152 to available agents. In the example of FIG. 1, *m* contacts (*e.g*., represented by contact 152) may visit the website 154 over a given period, and *n* agents (*e.g*., agents 190A, 190B, 190C, and 190D) are available during the given period. Each of the *m* contacts may be assigned to one of the *n* agents for servicing or other types of processing. In the example of FIG. 1, *m* and *n* may be arbitrarily large finite integers greater than or equal to one. In a real-world system, such as a contact center system, there may be dozens, hundreds, etc. of agents logged into the contact center system to interact with contacts 152 during a shift, and the contact center system may receive dozens, hundreds, thousands, etc. of contacts (*e.g*., telephone calls, internet chat sessions, emails, etc.) during the shift.

A contact-agent assignment module (not depicted) may be communicatively coupled to and/or configured to operate in the environment 100. The contact-agent module may implement one or more pairing strategies for pairing contacts (*e.g*., contact 152) with contact center agents. A variety of different pairing strategies may be devised and implemented by the contact-agent module. For example, a FIFO strategy may be implemented in which, for example, the longest-waiting agent receives the next available contact (*e.g*., as represented by contact 152) or the longest-waiting contact (*e.g*., as represented by contact 152) is assigned to the next available agent. In another example, a PBR strategy for prioritizing higher-performing agents for contact-agent assignment may be implemented. Under PBR, for example, the contact-agent assignment module assigns the highest-performing agent among available agents to the next available contact 152. In yet other examples, a BP strategy may be used for optimal contact-agent assignment using one or both of (i) information about contacts (*e.g*., as represented by contact 152), and (ii) information about agents. Additionally, or alternatively, various BP strategies may be used, such as a diagonal model BP strategy or a network flow BP strategy. See U.S. Patent Nos. 9,300,802; 9,781,269; 9,787,841; and 9,930,180.

The environment 100 may be coupled to the analytics software system 106 as described for FIG. 1A. In this context, the analytics system 106 may enable the website 154 to collect tags and data from the website 154 as the contact 152 browses the website 154. The analytics software system 106 may allow the owner of the website 154 (*i.e*., an enterprise client of the proprietor of the present techniques) to track the contact 152 in real-time, and to perform historical analytics on accumulated data about the browsing habits of the contact 152. The website 154 may be communicatively coupled to a channel monitoring and allocation runtime system 120 of the environment 100. Specifically, the analytics software system 106 may track the journey of the contact 152 on the website 154, including clicked elements, viewed products, overall/ page journey time, path through the sales funnel, etc.

The analytics software system 106 may aggregate statistics about page views and click-through rate (CTR). A library of modeling functions of the proprietor included in the website 154 may perform benchmark association, expectation calculation, and server communication. Expectation calculation is a particularly advantageous improvement, *i.e.*, this model may be translated or otherwise generated into JavaScript (JS) that is sourced by the tag. In some examples, the present disclosure provides for shifting the model execution to the personal device of the contact, which outsources computation, freeing up resources on the proprietor's server. While this does make code readable in the website 154 browser, the predicate definitions are obfuscated. For example, no global lookup table would be able to determine what "macro(25)" refers to. It is to be understood that the model may be translated or otherwise generated into other, different languages or client-side code to achieve the same optimizations for the server.

The channel monitoring and allocation runtime system 120 may be a collection of modules that implement sub-systems for performing aspects of the channel monitoring and allocation techniques of the present techniques. As discussed above, the channel monitoring and allocation runtime system 120 may include one or more models constructed by the employee 102, or otherwise automated script, using the channel monitoring and allocation modeling framework 104. The channel monitoring and allocation runtime system 120 may include a proxy server 162 that includes instructions for proxying requests from the Internet (*e.g*., from the contact 152) to other components deeper within the environment 100. The channel monitoring and allocation runtime system 120 may include an application programming interface (API) application 164 and a cache server 166.

The channel optimization runtime service 164 may include instructions for processing requests, executing models, determining optimal contact-agent allocations, and propagating nudge/no-nudge responses to other components (*e.g*., the website 154, the personal device of the contact 152, etc.) based on model outputs. The channel optimization runtime service 164 may be communicatively coupled to a call processing system 170. The call processing system 170 may comprise hardware and software (*e.g*., computing instructions) for handling routing, distribution, or other tasks related to distributing or routing calls in a contact center or other call system associated with a service provider. For example, the call processing system 170 may be implemented by the proprietor of the present techniques and may include additional systems and instructions for performing contact routing, contact center state, agent tracking, contact tracking and other features within a contact center context. For example, system 170 may comprise or be communicatively connected to a central switch 172. The central switch 172 may receive incoming tasks (*e.g*., telephone calls, internet chat sessions, emails, etc.) or support outbound connections to contacts via a dialer, a telecommunications network, or other modules (not shown). Central switch 172 may include routing hardware and software for helping to route tasks among one or more queues (or subcenters), or to one or more Private Branch Exchange ("PBX") or Automatic Call Distribution (ACD) routing components or other queuing or switching components within the call processing system 170. In some aspects, central switch may not be necessary if there is only one queue (or subcenter), or if there is only one PBX or ACD routing component in the call processing system 170.

In some aspects, if more than one queue (or subcenter) is part of the call processing system 170, each queue may include at least one switch (*e.g*., switches 180A and 180B). Switches 180A and 180B may be communicatively coupled to the central switch 172. Each switch for each queue may be communicatively coupled to a plurality (or "pool") of agents (*e.g*., agents 190A, 190B, 190C, and/or 190D). Each switch may support a certain number of agents (or "seats") to be logged in at one time. At any given time, a logged-in agent may be available and waiting to be connected to a task, or the logged-in agent may be unavailable for any of a number of reasons, such as being connected to another task, performing certain post-call functions such as logging information about the call, or taking a break. In the example of FIG. 1B, the central switch 172 of call processing system 170 may route tasks to one of two queues via switch 180A and switch 180B, respectively. Each of the switches 180A and 180B are shown with two agents each, for exemplary purposes, although each switch may host many agents. Agents 190A and 190B may be logged into switch 180A, and agents 190C and 190D may be logged into switch 180B.

The call processing system 170 may be communicatively coupled to channel optimization runtime service 164. Specifically, the channel optimization runtime service 164 may determine optimal allocations using a queue class that maintains a dictionary of active contacts and attempts to optimize the channel allocation. Active contacts are added/updated based on a number of HTTP requests from a received analytics tag. Multiple GET requests can be received and processed at the same time since this activity is handled by a thread pool with a number, *N*, of threads. Concurrently, inactive contacts may be removed using a threshold number of seconds since their last request (e.g., 60 seconds); and a separate thread runs a Linear Programming (LP) solver to determine the optimal allocation of active contacts, obtaining an indicator which identifies if any individual contact should receive a popup encouraging a transfer. For example, the indicator can be a True/False flag, a discrete variable, a name of a channel, etc.

The allocation problem may be implemented, for example, using SciPy's linear_sum_assignment function which takes a cost matrix (*C* ∈ 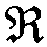 ^(*m* × *n*)) and computes $min {\sum }_{i}^{m} {\sum }_{j}^{n} {C}_{i , j} {X}_{i , j}$ *s.t.* ${\sum }_{i}^{m} {X}_{i , j} = 1$ *and* ${\sum }_{j}^{n} {X}_{i , j} = 1$ where *X* is a Boolean matrix representing the optimal allocation of worker *i* to job *j*. In this situation, the workers are the contacts on the website and the jobs are the two channels: web and contact center. Clearly, *m* does not equal *n* in this case, and thereby a determination regarding optimal allocation, mapping, or otherwise pairing may be made. This can be used to determine constraints on the number of contacts who can be provided or shown a web popup, which can decrease system resource utilization. Such constraints may also be added by selectively supersampling rows.

The following table lists a series of mathematical formulations that may be used for computing the optimal *X*, given *m* contacts; *n* (target) channels; *ε* tolerance and *Tr_{off}* as off transfer rate; a Conversion Rate matrix *C* ∈ 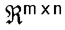 ; an Allocation Boolean matrix X ∈ 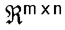 ; and a Transfer matrix *T* ∈ 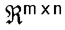 :

| Eqn. | Eqn. No. |
|---|---|
| $max {\sum }_{i}^{m} {\sum }_{j}^{n} {C}_{ij} {X}_{ij}$ | 1 |
| $s . t . {\sum }_{j}^{n} {X}_{ij} = 1 for i ∈ \left\{1,…,m\right\}$ | 2 |
| ${\sum }_{i}^{m} {X}_{i , j = callcentre} = min \left(m, n_agents\right)$ | 3 |
| $\left\|\frac{1}{m}{\sum }_{i}^{m} {\sum }_{j}^{n} {T}_{ij} {X}_{ij} - {Tr}_{off}\right\| < ε$ | 4 |

Equation #1 is an objective function that is determined by maximizing the total conversion rate (*Cᵢⱼ*) given an allocation (*Xᵢⱼ*). A person skilled in the art would readily understand that any performance metric contemplated herein may be used by Equation #1 instead of a conversion rate. Equation #2 is a first optimization constraint. Each row of an allocation matrix represents a different contact, and each contact may be assigned to only one channel, (*i.e*., the row must sum to 1). Equation #3 is a second optimization constraint, which states that the assigned channel has a finite number of agents free to take calls (*i.e*., n_agents). The constraint means that the number of contacts assigned to an assisted channel (e.g., a channel with agents) cannot exceed the number of free agents. Equation #4 limits the number of contacts allocated to the assisted channel, by ensuring that the absolute value of the average probability of moving from the unassisted channel to the assisted one for a given allocation of available contacts to either the assisted or unassisted channels is less than a tolerance, to prevent the average probability being too far off from the percentage of contacts who visit the unassisted channel and transfer to the assisted channel Tr_{off}. This tolerance can also be according to a pre-determined threshold allocation limit set by a contact center. Such equations may be executed or implemented by the channel monitoring and allocation runtime system 120.

The cache server 166 may enable requests from the internet to reach other components of the environment 100 (*e.g*., one or more production servers). The cache server 166 may store visitor information and retrieve model information. Specific modeling techniques are discussed below.

In some cases, one or more components of the environment 100 (*e.g.*, the proxy server 162) may be implemented using Amazon Web Services (AWS) cloud computing resources and/or other suitable cloud-based technologies. In some cases, one or more components of the environment 100 (*e.g*., the channel optimization runtime service 164) may be implemented using Java/Spring or other programming languages and/or application frameworks. In some cases, one or more components of the environment (*e.g*., the cache server 166) may be implemented using and/or include one or more databases (*e.g*., Redis).

In operation, the channel monitoring and allocation runtime system 120 receives nudge requests from the website 154 as the contact 152 browses the website 154. The nudge request(s) may be initiated by one or more sets of instructions executing in the software libraries of the device of the contact 152 and/or the website 154. The nudge requests may include parameters (*e.g*., ML outputs) to determine (*e.g.*, ask or request) whether the contact 152 should be nudged (*i.e*., deflected, or diverted) to the contact center. The channel monitoring and allocation runtime system 120 proxies the nudge requests to the channel optimization runtime service 164, which analyzes the nudge request in the context of the constructed models, determines an optimal channel allocation of prospective contacts, caches contact information and queries models from the cache server 166, and queries agent availability from the call processing system 170. In view of this information, the API application generates a nudge response and transmits the nudge response to the website 154 via the proxy 162. The website 154 may include instructions for notifying the contact 152 (*e.g*., via scripts of the proprietor of the present techniques) when the channel optimization runtime service 164 determines (*e.g*., via the LP solver analyzing request parameters as discussed herein) that the contact 152 should be nudged.

The client 154 (more precisely, a software library of the proprietor executing in the website 154 and/or the personal device of the contact 152) may generate a notification based on (*e.g*., a "call us" message in response) the nudge response. Specifically, once channel expectations have been determined, an asynchronous request (*e.g.*, an AJAX GET request) is sent to the channel monitoring and allocation runtime system 120 containing a contact identifier along with these expectations. The request may be sent in JSONP format to bypass Cross-Origin Resource Sharing (CORS) restrictions. The result is received in the client website 154 and/or device of the contact 152 subsequently and triggers a popup. A session ID is associated with the contact 152 (*e.g.*, via a unique telephone number associated with the contact 152, an IP address, a cookie, or other identifying information of the contact 152) such that when the contact 152 calls in, the contact 152 can be quickly paired with an available agent, assuming an available agent exists at that time. The environment 100 tracks the outcome of the contact 152 journey, to enable the environment 100 to adapt and evolve over time.

As discussed, in real-world systems, the channel monitoring and allocation runtime system 120 may operate in a context wherein the channel optimization runtime service 164 analyzes the "nudge-worthiness" (*i.e*., determining whether to initiate a popup notification) of multiple contacts 152 in parallel, and batches multiple nudge responses to the website 154, in parallel. In this way, the channel monitoring and allocation runtime system 120 may avoid race conditions that might occur if the channel monitoring and allocation runtime system 120 were to nudge contacts serially or sequentially. The channel monitoring and allocation runtime system 120 may maintain locks, semaphores or other stateful mechanisms for avoiding such race conditions, in some cases.

It will be appreciated by those of ordinary skill in the art that the cosmetic appearance of the website 154 may differ significantly from enterprise to enterprise, but the present techniques are flexible and adaptable to many different sales and marketing scenarios across a broad range of enterprise websites and designs. In other words, "front end" of the enterprise website 154 is predominantly determined by the needs of the enterprise and/or the enterprise's existing setup and sales/marketing goals. The website 154 may include one or more software libraries that implement the present techniques, apart from the primary purpose of the website 154 (*e.g*., selling products or services of the client). For example, the website may be implemented using a web stack (*e.g*., HTML, CSS, JavaScript, jQuery, etc.) with cookies to track certain actions. The backend may include a web server (*e.g*., Apache) with one or more scripting languages (*e.g*., PHP: Hypertext Processor (PHP)) enabled. Analytics libraries (*e.g*., Google Analytics and other third-party analytics) may be directly integrated with the website to collect information and to trigger a popup.

In one case, the popup notification may show a telephone number managed by the proprietor of the present techniques and instruct the contact 152 to dial the number. In another case, the popup notification asks the contact 152 to input their own phone number which goes into an outbound dialer. In yet another case, the popup notification includes a softphone that is displayed in the browser.

### Exemplary Multi-Contact Optimization Scenario

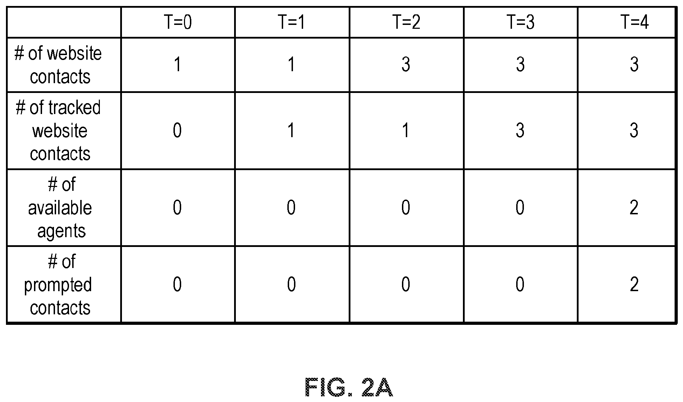

FIG. 2A depicts a simplified example of a channel monitoring and routing system at time=0 in accordance with the present disclosure. At T=0, a first contact has visited the website. From T=0, for a given period of time (*e.g*., 10 seconds, 15 seconds, 30 seconds, 45 seconds, 60 seconds, 2 minutes, 5 minutes, etc.), the first contact is in a threshold holding period during which no decisioning actions, by the channel monitoring and allocation runtime system 120, are taken, accordingly, saving memory space, processing power, and network bandwidth in contrast to conventional systems which are constantly executing decisions based on contact data. For example, the channel monitoring and allocation runtime system 120 merely obtains and stores data about the first contact during the threshold holding period. In another example, the channel monitoring and allocation runtime system 120 does not even track the first contact's activity on the website during the threshold holding period in order to conserve additional memory space, processing power, and network bandwidth. The first contact may correspond, for example, to the contact 152, and the website visited to the website 154.

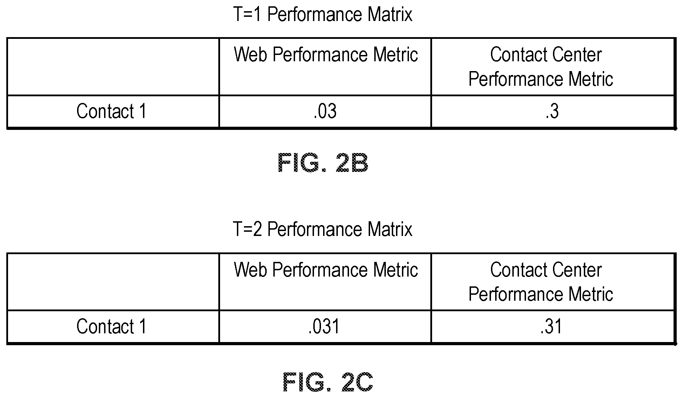

FIG. 2B depicts example contact data at time=1 in accordance with the example of FIG. 2A. At T=1, the first contact has been clicking around the website. At this time, a model (*e.g.*, a model in the channel monitoring and allocation runtime system 120) computes respective web and contact center performance measurements for the first contact of 3% and 30%, respectively. For example, performance measurements discussed in the present disclosure may be conversion rates on sales, customer retention rates, customer satisfaction rates, average handle time measurements, etc., or combinations of two or more measurements.

Computed values for respective contacts are stored in the matrix. Although the expected value of the contact center performance measurement is much higher than the web performance measurement, the contact center has no available agents, so no contacts would be diverted to the contact center. In particular, on each click of the first contact, script instructions executing in the website send those data points to the model in the channel monitoring and allocation runtime system 120. As shown in FIGs. 2B-2E, the model estimates the value of a performance metric based on the received data points. The value may be based on the actions of the contact, such as which pages the contact is viewing, which items the contact is clicking on or hovering over, whether the contact is clicking frantically or assuredly, whether the contact is remaining on a single page for a long time, etc. The modeling may also examine the historical aspects of the contact's use. For example, how frequently the contact visits the page, cookie information, inferences about the contact or other similar contacts, etc. The channel monitoring and allocation runtime system 120 polls the associated contact center to check for agent availability, and provides the availability into computing instructions implementing Equation #3 above, to satisfy that constraint.

FIG. 2C depicts example contact data at time=2 in accordance with the FIGs. 2A-2B. At T=2, the first contact continues to click around the website. At this time, a second contact and a third contact join the website. The ML model updates the expected performance of the first contact, resulting in respective web and call center values of 3.1% and 31.0% (*i.e*., a 3.1% chance of a desirable outcome via the web channel and a 31.0% chance of a desirable outcome via the call center channel). Meanwhile, the second and third contacts are in their respective holding periods, where the channel monitoring and allocation runtime system 120 can collect data points regarding the web activity of the second and third contacts but does not make diversion determinations. In some examples, the ML model does not determine performance measurements of the second and third contacts during their holding periods to conserve resources, as discussed above. In the example of FIG. 2C, there continues to be no contact center availability, so no contacts would be diverted to the contact center.

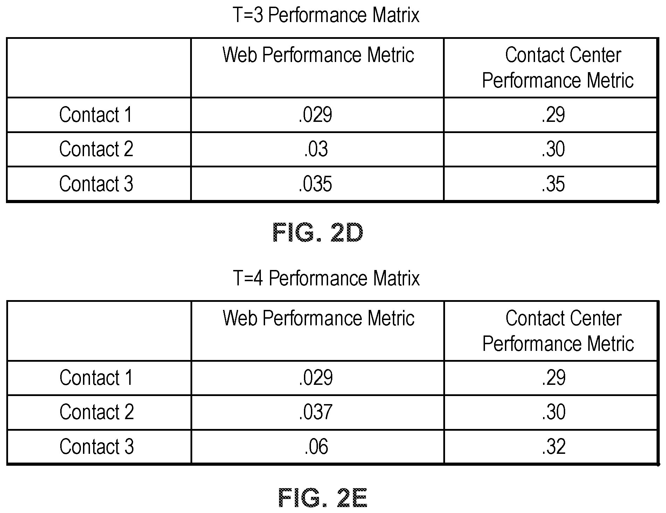

FIG. 2D depicts an example contact data at time=3 in accordance with the FIGs. 2A-2C. At T=3, the first, second and third contacts continue to click around the website. All three contacts are now past their respective holding periods. The model updates the respective performance measurements of the first contact based on additional data received after T=2, and establishes respective performance measurements for the second and third contacts. Agents in the contact center remain unavailable, resulting in no diversion of contacts from the website to the contact center.

FIG. 2E depicts an example contact data at time=4 in accordance with the FIGs. 2A-2D. At T=4, the contacts continue clicking around the website. The model updates the performance measurements of all three contacts. Further, the model receives information from the contact center that two agents are available.

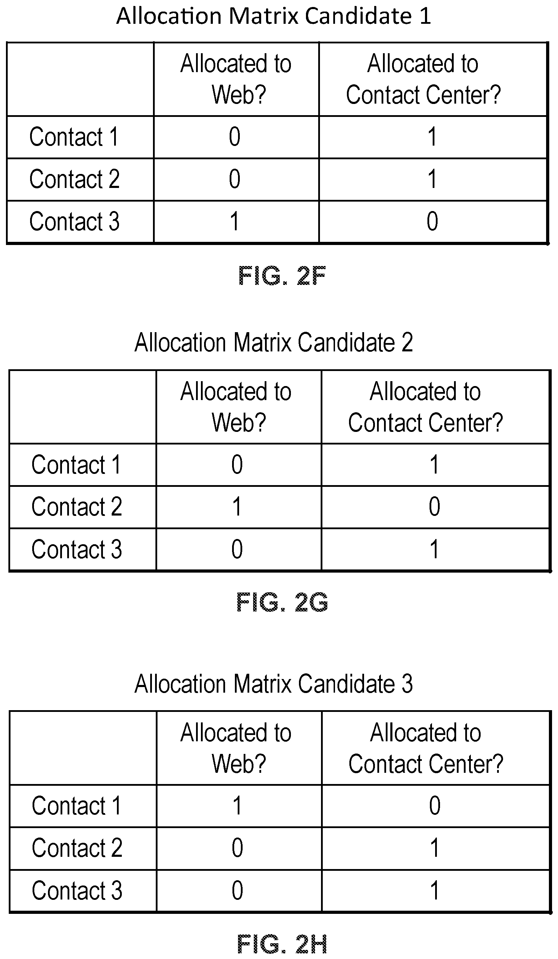

FIGs. 2F-2H depict exemplary allocation matrices in accordance with FIGs. 2A and 2E, at the time of T=4 as in FIG. 2E. Each matrix of FIGs. 2F-2H demonstrates an exemplary allocation of the first, second, and third contacts assigned to one of the two available channels (the first channel is the website being an unassisted channel and the second channel is the contact center being an assisted channel). For example, the present disclosure contemplates that multiple allocation matrices are computed in accordance with Equations 1-4, above. In some examples (not shown), every possible allocation combination of the contacts between the website channel and the contact center channel is considered by the LP solver. In other examples, as shown in FIGs. 2F-2H, the LP solver efficiently evaluates a subset of the possible allocation matrices in order to determine which contacts at the website should be nudged to the contact center.

FIG. 2F shows an exemplary allocation where the first contact and the second contact are allocated to the contact center (corresponding to how the contact center has two available agents), and the third contact remains allocated to the website. For example, the LP solver determines a performance measurement of the matrix shown in FIG. 2F for comparison to other possible matrices (e.g., FIGs. 2G-2H). For example, the performance measurement of the matrix is determined based on the performance measurements determined for each contact in FIG. 2E, and, in particular, the contact center performance measurement of the first contact, the contact center performance measurement of the second contact, and the website performance measurement of the third contact. For example, one exemplary performance measurement of the matrix shown in FIG. 2F is an average of the performance measurements for each contact's assigned channel: $\frac{.29 + .3 + .06}{3} = 0.2167$ Similarly, the exemplary performance measurement of the matrix shown in FIG. 2G is 0.2157, and the exemplary performance measurement of the matrix shown in FIG. 2H is 0.2163. Accordingly, in this example, the present disclosure provides for selecting the allocation shown regarding FIG. 2F, which has the highest performance measurement compared to the other allocation matrixes shown in FIGs. 2G and 2H. Therefore, the first contact and the second contact would receive a notification at the website prompting them to connect with the contact center, while the third contact would not receive such a notification. In the example of FIGs. 2A-2H, the present disclosure provides for determining the optimum allocation for each of the contacts and the channels.

In other examples, the present disclosure provides for determining a performance measurement of the exemplary allocation matrix that include resource utilizations of the underlying system, such as telecommunication connections and as otherwise described herein.

Notably, the third contact has the highest contact center conversion rate (0.32), compared to 0.29 and 0.3, respectively for the first and second contact; but ultimately a comparison of the performance measurements for each matrix shown in FIGs. 2F-2H determines that the third contact may remain at the unassisted channel. This is due to the fact that Equation #1, above, is optimizing globally among all possible channels; that is, performing a comparative advantage computation among different scenarios involving multiple contact combinations.

While the example discussed regarding FIGs. 2A-2H contemplates three contacts and two available agents at the contact center, the present disclosure contemplates that the disclosed channel monitoring and allocation system performs corresponding calculations for any number of contacts and any number of agents. Further, although the example discussed regarding FIGs. 2A-2H contemplates two channels, including one unassisted channel and one assisted channel, the present disclosure contemplates corresponding calculations may be made for any number of assisted channels and any number of unassisted channels. In some examples, the present disclosure provides for a semi-assisted channel (e.g., an artificial intelligence bot chat function which is overseen by a human agent) which may be evaluated similarly to the metrics discussed above.

By distributing website contacts in this manner, the present techniques are able to allocate contacts between assisted and unassisted channels efficiently. Thus, by keeping contacts efficiently allocated between possible channels, the system uses fewer resources of the service provider by reserving notification prompting for only a selected subset of the possible contacts. In some examples where multiple assisted channels and multiple unassisted channels are available for the same enterprise (e.g., an enterprise which operates multiple contact centers), the techniques of the present disclosure may provide for reducing the needed number of assisted channels because the contacts are allocated efficiently among unassisted channels as well.

Specifically, each connection to the data center consumes resources. By selectively processing calls, rather than using FIFO or another inefficient/naive algorithm, the present techniques improve on conventional techniques. The present techniques operate efficiently by choosing connections in an optimal manner, which allows the system to operate with limited or fewer resources (*e.g*., limited agent connections) compared with non-optimizing systems. This provides an improvement over prior systems that do not implement this channel monitoring and routing solution.

Further, in cases wherein the agents themselves are automated (*e.g*., in the case of AI-based agents) those automated resources are consumed more efficiently, by refraining from routing contacts unlikely to convert via phone to such autonomous agents. This is critically important, because operating multiple AI agents consumes significant computational resources.

### Exemplary Control Flow Diagram

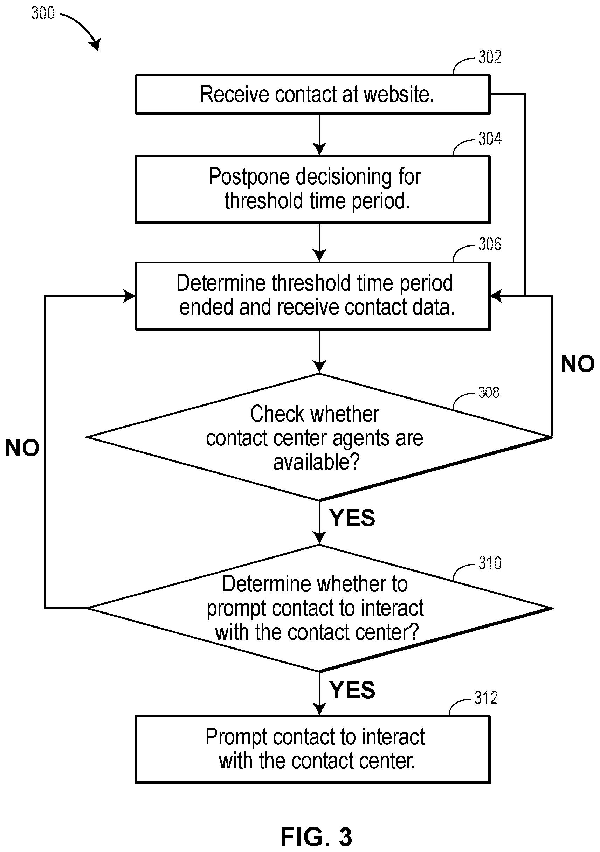

FIG. 3 depicts a control flow diagram 300 associated with facilitating certain functionalities of the present techniques. The control flow diagram 300 may begin at step 302 when a contact accesses a website associated with a channel monitoring and allocation system via a personal device of the contact. For example, step 302 corresponds to the time T=0 of FIG. 2A.

At step 304, the remote computing system postpones making any decisions about allocating the contact for a threshold period of time. In one example, the personal device associated with the contact postpones sending tracking information concerning the contact to the remote computing system for a threshold period of time. In another example, the personal device associated with the contact sends tracking information concerning the contact to the remote computing system during the threshold period of time. In some examples, the threshold period of time is a pre-determined 5 seconds, 10 seconds, 15 seconds, 30 seconds, etc. In other examples, the threshold period of time is determined based on a time of day, a frequency of clicks by the contact, or other metrics as commonly used to track website visitors. For example, step 304 corresponds to the time between t=0 and t=1 of FIG. 2A. During this time, the contact may interact with (e.g., via clicking around on) one or more user interfaces of the website. The user interfaces may be sales components of a website, such as the website 154 of FIG. 1B. The contact may continue to click on the user interfaces after step 304, as the flow diagram 300 continues.

In some examples of step 304, the personal device sends tracking information concerning the contact to a remote computing system (e.g., the channel monitoring and allocation system), also referred to as initial activity data. For example, the remote computing system stores the received tracking information.

At step 306, the remote computing system determines that the threshold time period has ended. If the remote computing system has not already received website tracking data in step 304, the remote computing system now receives first website tracking data about the contact transmitted by the personal device. In other examples, the remote computing system continues to receive additional website tracking data, or additional activity data, about the contact. For example, instructions in the personal device of the contact may transmit real-time click and event data for the contact on the website to the remote computing device. The contact's clicks may be collected by the analytics module 106 of FIG. 2B, in some aspects.

At step 308, the remote computing system checks whether any contact center agents are available for receiving contacts diverted from the website to the contact center system. For example, the remote computing system corresponds with a contact center system to determine agent availability.

In some examples, the contact center system has one or more agents who are available to receive contacts, but the remote computing system is not permitted to divert contacts from the website to the contact center system, and accordingly, the remote computing system may determine that the agents are unavailable for contact diversion. For example, agents may be available to receive contacts but the contact center system may have predetermined rules for receiving contacts diverted from the website. In some examples, the contact center system has a predetermined allocation limit for diverted contacts for a threshold amount of time; accordingly, the remote computing system cannot divert contacts from the website to the contact center if the predetermined allocation limit would be exceeded (e.g., a certain number of diverted contacts are permitted per one hour, six hour, eight hour, twelve hour, one day, one week, one month, and similar increments). In some examples, the predetermined allocation limit is a count of diverted contacts, a ratio or frequency of diverted contacts compared to contacts originally received at an assisted channel. In some examples, the predetermined allocation limit is based on any of a total number of contacts at one or more unassisted channels, a total number of contacts at one or more assisted channels, a total number of contacts at one or more unassisted channels expected to arrive within a threshold time, a total number of contacts at one or more assisted channels expected to arrive within a threshold time, a time of day, and/or day of the week.

For example, this check may include determining whether the call processing system 170 of FIG. 1B is enabled, in some aspects. It will be appreciated that the benchmarking activities discussed above may include selectively enabling and disabling access to the call processing system 170 to determine respective system benchmarks, e.g., with the call processing system, *e.g*., for example its related hardware and/or software, turned on and off, or otherwise toggled between an on-off state, active-inactive state, or the like.

If the remote computing system determines that no contact center agents are available for receiving contacts diverted from the website, method 300 returns to step 306 to continue receiving website tracking data associated with the contact. In some examples, the remote computing system returns to step 310 intermittently (e.g., every 50 milliseconds, every 100 milliseconds, every 1 second, every 5 seconds, every 10 seconds, etc.). In some examples, the remote computing system only proceeds to step 310 during certain times of day (e.g., when the contact center system is open).

If the remote computing system determines that contact center agents are available for receiving contacts diverted from the website, method 300 proceeds to step 310. At step 310, the remote computing system determines whether to prompt the contact to interact with the contact center system. For example, the remote computing system determines one or more initial performance measurements for the contact based on the received website tracking data; the received website tracking data for the initial performance measurement may comprise the initial activity data from the holding period, additional activity data received after the holding period, historical outcome data corresponding to the contact or an associated contact type, agent data corresponding to at least one agent of the contact center system, and any subset thereof. For example, the remote computing system performs analysis on the contact (or on the contact and other contacts currently accessing the website) in accordance with FIGs. 2A-2H above. The computation may be defined by the employee 102 using the channel optimization modeling framework 104, in some aspects. The computed information may be calculated by one or more ML models as described herein.

The remote computing device may include one or more processors and one or more memories including instructions that, when executed, cause the remote computing device to apply the LP solver techniques discussed with respect to the channel optimization runtime service 164 of FIG. 1B, for example, to generate, a result. The result, which may be a string, a Boolean, integer, or continuous value, indicates whether the contact visiting and clicking should be deflected to an assisted channel.

The real-time click and event data may be used as model inputs to generate a decision about whether a contact should receive a pop-up notification or not. The decision to provide a pop-up notification for a contact depends upon dynamically evaluating all contacts on the website and checking contact center state at runtime to optimally improve overall sales or otherwise resources across both web and voice channels using the runtime model/LP Solver.

The control flow diagram 300 may fire one or more triggers in response to step 310. When the result is False, for example, the control flow diagram 300 may include determining whether the contact is still on the web and then returning to step 306 to continue tracking the contact's website activity.

When the result is True, method 300 proceeds to step 312 where the trigger may result in attempting to divert the contact toward the call processing system 170 via a popup notification. The tags and triggers may be elements of the analytics module 106. In some cases, the analytics tags and triggers may be implemented using Google Analytics and/or Google Tag Manager.

Although method 300 discusses monitoring and allocating a contact between an unassisted web channel and an assisted voice channel, the present disclosure contemplates that similar monitoring and allocating as provided for in method 300 may be performed to monitor and allocate the contact i) between multiple unassisted channels, ii) between multiple assisted channels, and iii) between one or more unassisted channels and one or more assisted channels.

### Exemplary Client-Side Modules

Above, reference is made to a library of modeling functions and software libraries implementing client-side operations of the present techniques. FIG. 3 describes examples of the client-side modules in operation for performing aspects of the present techniques (*e.g*., for operating one or more ML models).

In some examples of performing aspects of the present disclosure a browser window may include an inset with a JavaScript console (it will be appreciated by those of ordinary skill in the art that the browser may implement any suitable programming language). The console may include a tracking script computed by the personal device of a contact, such that the tracking script provides an output including analytics token identifiers, repeat visit timing, repeat visit number, benchmark identifier, click count, number of pages, number of unique pages, session ID, expected revenue, expected transfer rate, etc. The script output may be generated by instructions executing in the software library of the contact 152 at the time the contact first visits the client website (*e.g.*, at T=0 of FIG. 2A, and/or at a time at block 302 of FIG. 3) and/or on an ongoing basis as the contact browses the website.

For a set of events in the browser (*e.g*., for each click of the contact), the instructions may transmit the tracked information (*e.g*., Session ID, expected revenue for web, expected revenue for voice (e.g., if the contact were communicatively coupled with an available agent at the contact center), expected transfer rate with pop-up notification, expected transfer rate without pop-up notification). The instructions may transmit the tracking output and analytics information via an API such as an HTTP request or other network request to an LP solver (*e.g*., the channel monitoring and allocation runtime system 120).

For example, the console would include subsequent clicks (e.g., any click after the first click on the website), accumulated pages visited, and identifiers of items clicked. As discussed, instructions executing in the contact computing device (*e.g*., JavaScript code) are evaluated after each click and the data is transmitted to a remote database (*e.g*., via the analytics module 106 of FIG 1B.).

In some examples, an HTTP request is transmitted by instructions executing in the contact computing device to a remote solver, according to one aspect of the present techniques. The HTTP request, e.g., a GET request, may include request key/value parameters corresponding to the browsing contact, including a session ID, an expected web conversion rate value, an expected voice conversion rate value, a transfer probability with popup value, and a transfer probability without popup value. More or fewer request key/values pairs may be transmitted. Each of the transmitted request key/value pairs may be determined in the personal device of the contact, *e.g*., using ML model outputs computed as discussed herein, for example, in real-time (*i.e*., each time the contact clicks). A response to the HTTP request may be received in the client.

As discussed above, the solver may run within, or by accessing, an API (*e.g*., a REST API, such as the channel optimization runtime service 164. The REST API may be implemented, for example, using standard frameworks such as Flask, Spring, etc. The solver API may regularly initiate and receive information about the number of currently available agents in a telesales queue of the contact center, and use such numerical values as constraints as described with respect to Equation #3 above. The solver API may asynchronously receive HTTP requests (*e.g*., the HTTP request 350), perform computations, and issue HTTP responses as shown in FIG. 3F indicating whether a popup notification should be made visible to the contact to nudge the contact to an assisted channel (e.g., a voice channel).

In some examples, an HTTP response including a payload corresponding to the HTTP request, and a resulting GUI action. The response payload may include a header status and a body including response key/value parameters, including a Session ID and an LP solver response value. For example, if the LP solver response is True, this indicates that a contact having a matching session ID to the session ID in the response payload should be deflected to the contacts center using the techniques discussed herein. The GUI action may correspond to displaying an inbound graphical user interface.

### Exemplary Computer-Implemented Methods

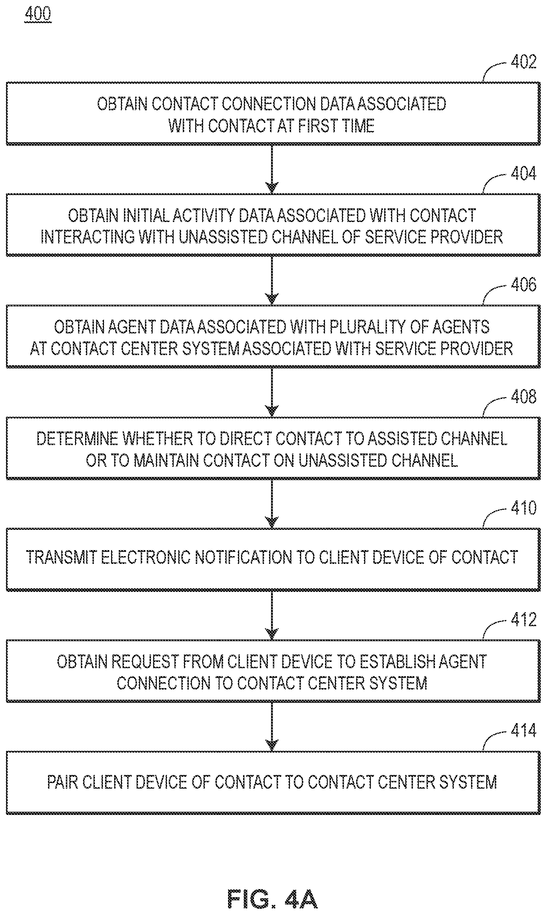

FIG. 4A shows a flow diagram of a web-based computer-implemented method 400 for channel monitoring and routing according to aspects of the present disclosure. The method 400 is generally directed to a micro view of the present techniques, and captures the experience of an individual contact (*e.g*., contact 152).

The method 400 may include obtaining contact connection data associated with a contact at a first time, wherein the contact connection data comprises activity of the contact on an unassisted channel of a service provider (block 402). For example, the unassisted channel may correspond to a website such as the website 154 of FIG. 1B. The contact may correspond to the contact 152, and the contact connection data may include mouse clicks, browser data, HTTP requests, cookies, etc. The first time may correspond to T=0 of FIG. 2A, for example. The service provider is generally understood to be the proprietor of the website 154, or an enterprise associated with the proprietor of the website 154, upon which elements of the present techniques run as one or more script libraries (*e.g*., JavaScript models and analytics). The contact connection data may include at least one of a contact identifier and/or a time of arrival. The predetermined period of time may be thirty seconds in some deployments.

The method 400 may include obtaining initial activity data associated with the contact interacting with the unassisted channel of the service provider, wherein the initial activity data comprises at least one of: i) information about the contact during a predetermined period of time after the first time; or ii) a number of interactions of the contact on the unassisted channel (block 404). For example, the predetermined period of time may be a holding period, such as the T=1 of FIG. 2B or holding period as otherwise discussed herein. The initial activity data may include at least one of website tracking data, a number of interactions by the contact, and/or an interaction frequency. Such data may comprise, or otherwise be referred to as, "initial activity data" and/or "holding period" data.

The method 400 may include obtaining agent data associated with a plurality of agents at a contact center system associated with the service provider (block 406). The agent data define or comprise whether a connection to an agent is available, which agents are available, characteristics of one or more agents, or otherwise availability or information of the agents.

Blocks 402, 404 and 406 may be performed by the channel optimization runtime system 120 depicted in FIG. 1A and FIG. 2B. The system 120 may obtain the agent data by issuing a query (*e.g*., a GET query) to the call processing system 170 of FIG. 1B, for example. As discussed, the call processing system 170 may correspond to a system owned, operated and/or controlled by the proprietor of the present techniques.

The method 400 may include determining whether to direct the contact to at least one assisted channel of the service provider, the determining based on the initial activity data and the agent data (block 408). For example, the method 400 may direct the contact to an assisted channel (*e.g*., a contact center associated with the contact processing system 170 of FIG. 1B). The determining may include computing an expected metric of the contact, such as an expected conversion rate as shown in FIG. 2C. For example, the determining is based on activity data as collected for the contact, including the initial activity data collected during the holding period, additional activity data collected after the holding period, historical outcome data associated with the contact or a contact type of the contact, agent data associated with at least one agent of the contact center, and any subset thereof.

In some deployments, method 400 further comprises determining a first revenue for the contact at a first assisted channel of the at least one assisted channel; determining a second revenue for the contact at the unassisted channel; determining whether the first revenue is greater than the second revenue, or whether the first revenue is greater than the second revenue by a threshold amount; and determining to direct the contact to the first assisted channel based on determining that the first revenue is higher than the second revenue. In still further deployments, the determining of whether to direct the contact to at least one assisted channel of the service provider is further based on an expected transfer rate for the contact. The expected transfer rate may be based on the contact connection data and/or the initial activity data. Still further, transfer or otherwise routing may be determined on resource utilization as described herein.

The method 400 may include based on determining to direct the contact to the at least one assisted channel of the service provider, transmitting an electronic notification to a client device of the contact (block 410). For example, a script executing in the browser of the contact 152 may or the website 154 may cause a graphical notification to be displayed in the browser of the contact 152 (or elsewhere in the device of the contact 152) prompting the contact to telephone a call-in number of the service provider. In some examples, the particular telephone number may be linked to a particular agent based the website clicks or navigation of the contact. In some cases, the electronic notification may be an external message, such as an SMS message, a text message, an email message, a push notification, etc.

The method 400 may include, after transmitting the notification to the contact, obtaining a request from a client device to establish an agent connection to the contact center system (block 412). The request from the client device may take the form of any indication that the contact seeks to accept the invitation to contact the service provider via (*i.e*., acceptance of the prompt of the transmitted electronic notification of block 410). This request may take the form of a GET request (*e.g*., if the contact's acceptance constitutes clicking on a link in the notification), an incoming telephone call, an email reply, a text message reply, etc.

The method 400 may include pairing, based on the request, a client device of the contact to the contact center system, wherein the pairing establishes a communication between an agent of the plurality of agents and the contact (block 414). The pairing may take the form of, for example, establishing a telephone call or otherwise telecommunications connection between the contact and the agent. The pairing may include removing the agent from a list of available agents. It should be appreciated that the agent with whom the contact is paired may not necessarily be an agent identified in a previous step of the method 400. In other words, the pairing may occur based on which agent(s) are free at the time the pairing is executed, and formerly available agents may have become unavailable in the interim period prior to pairing. This may occur, for example, if an agent identified in the agent data was paired with another contact prior to the contact accepting the electronic notification prompt. In some aspects, the pairing may be based on the initial activity data and the agent data. It will be appreciated that the contact might use a first personal device associated with the contact to surf the web (*e.g*., laptop) but call the contact center on a second personal device associated with the contact (*e.g*., smart phone).

Although method 400 discusses monitoring and allocating a contact between an unassisted web channel and an assisted voice channel, the present disclosure contemplates that similar monitoring and allocating as provided for in method 400 may be performed to monitor and allocate the contact i) between multiple unassisted channels, ii) between multiple assisted channels, and iii) between one or more unassisted channels and one or more assisted channels.

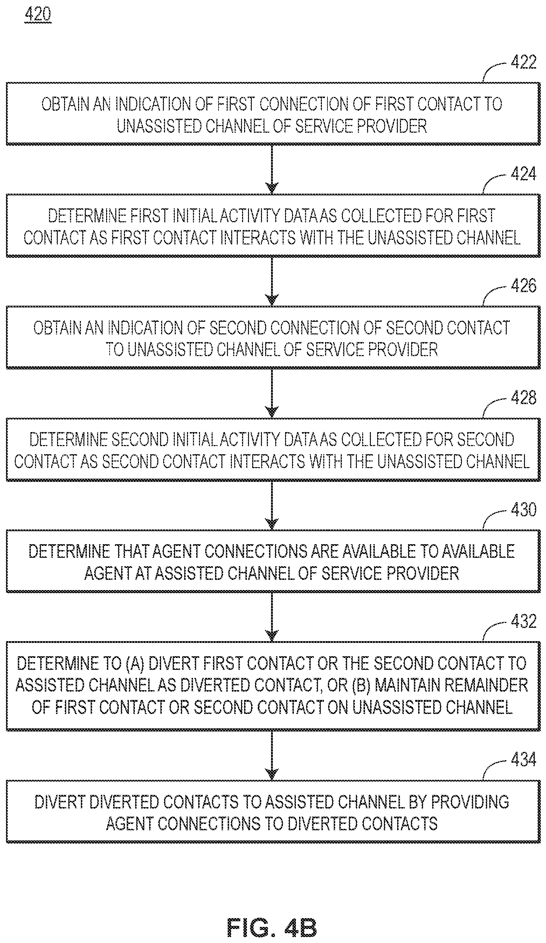

FIG. 4B depicts a flow diagram of a web-based computer-implemented method 420 for optimizing assistance channel routing according to aspects of the present disclosure. The method 400 is generally directed to a macro view of the present techniques, to capture the comparative advantage choices that aspects of the present techniques (*e.g*., the channel monitoring and allocation runtime system 120) make when tracking multiple contacts.

The method 420 may include obtaining an indication of a first connection of a first contact to an unassisted channel of a service provider (block 422). The first contact (*e.g*., a first contact) is connected to a third-party website (*e.g*., the website 154 of FIG. 1B). Continuing this example, the channel monitoring and allocation runtime system 120 may receive an indication of the connection, *e.g*., as a "Session_ID" transmitted by the device of the contact 152. The indication may pass directly from the device of the contact 152 to the channel optimization runtime service 164, for example, via the proxy 162. In some aspects, the indication may transmit an identifier of the third-party website. The indication of the first connection of the first contact to the unassisted channel of the service provider may be a GET request including a session identifier uniquely identifying the first contact, for example. The indication may be received, for example, via the proxy 162 of FIG. 1B in the channel optimization runtime service 164 of FIG. 1B.

The method 420 may include determining first initial activity data as collected for the first contact as the first contact interacts with the unassisted channel (block 424). For example, the first initial activity may include browser data, cookies, HTTP requests, mouse click elements, viewed products, overall/ page journey time, path through the sales funnel, etc. The first initial activity data may correspond to data collected during the holding period (*i.e*., T=0 time period of FIG. 2A). The first contact may correspond to the contact 152, for example. The unassisted channel may correspond to the website 154, for example. The method 420 may include storing the activity data as collected in, and/or retrieving the activity data from, the analytics module 106 of Figure 1B, for example. In some examples, the first initial activity data may comprise historical outcome data of the service provider.

The method 420 may include obtaining an indication of a second connection of a second contact to the unassisted channel of the service provider (block 426). The second connection may be similar to the first connection, except that the second contact differs from that of the first contact.

The method 420 may include determining second initial activity data as collected for the second contact as the second contact interacts with the unassisted channel (block 428). The second initial activity data may be similar to the first initial activity data, except relating to the second contact, rather than the first contact.

The method 420 may include determining that one or more agent connections are available to at least one available agent at an assisted channel of the service provider (block 430). As discussed above, the channel monitoring and allocation runtime system 120 may continuously poll (or receive events from) the call processing system 170 indicating the availability of agents.

The method 420 may include determining to (a) divert at least one of the first contact and the second contact to the assisted channel as one or more diverted contacts, and (b) to maintain a remainder of the first contact or the second contact on the unassisted channel, based on the first initial activity data and the second initial activity data (block 432). The determining may include computing the comparative advantage of the first contact and the second contact, based on their respective expected conversion rates for the web and call center, as depicted in FIG. 2F, and then selecting an allocation matrix resulting in the maximum average conversion rate. For example, the determining is based on activity data as collected for the first and second contact, including the initial activity data collected during the holding period, additional activity data collected after the holding period, historical outcome data associated with each contact or a contact type of each contact, agent data, and any subset thereof.

The method 420 may include diverting the one or more diverted contacts to the assisted channel by providing the one or more agent connections to the one or more diverted contacts (block 434). As discussed above, the method 420 may generate an electronic notification (*i.e*., a nudge response as depicted in FIG. 1B) that causes a script executing in the website or on the browser of the one or more diverted contacts (e.g., contact 152 of FIG. 1B) to trigger a graphical notification element.

The method 420 may include determining a first transfer rate for the first contact based on the first initial activity data; and determining a second transfer rate for the second contact based on the second initial activity data, wherein the determining whether to divert at least one of the first contact and the second contact to the assisted channel is further based on the first transfer rate and the second transfer rate. As discussed above, the first transfer rate and the second transfer rate may correspond to an unprompted transfer rate and/or a prompted transfer rate. In some examples, when the first transfer rate and the second transfer rate correspond to an unprompted transfer rate, the transfer rate may comprise a probability that the first contact transfers from the unassisted channel to the assisted channel without a prompt from a contact center system; and/or the second transfer rate may comprise a probability that the second contact transfers from the unassisted channel to the assisted channel without a prompt from a contact center system.

For example, the first and second transfer rates can be based on activity data as collected for the first and second contact, including the initial activity data collected during the holding period, additional activity data collected after the holding period, historical outcome data associated with each contact or a contact type of each contact, and any subset thereof.

The method 420 may further include: determining a third transfer rate for the first contact based on the first initial activity data; and determining a fourth transfer rate for the second contact based on the second initial activity data, wherein the determining whether to divert at least one of the first contact and/or the second contact to the assisted channel is further based on the third transfer rate and the fourth transfer rate. The third transfer rate may correspond to a probability that the first contact transfers from the unassisted channel to the assisted channel with a prompt from a contact center system; and the fourth transfer rate may comprise a probability that the second contact transfers from the unassisted channel to the assisted channel with a prompt from a contact center system.

For example, the third and fourth transfer rates can be based on activity data as collected for the first and second contact, including the initial activity data collected during the holding period, additional activity data collected after the holding period, historical outcome data associated with each contact or a contact type of each contact, and any subset thereof.

The method 420 may further include determining a first unassisted channel conversion probability for the first contact based on the first initial activity data; and determining a second unassisted channel conversion probability for the second contact based on the second initial activity data, wherein the determining whether to divert at least one of the first contact and/or the second contact to the assisted channel is further based on the first unassisted channel conversion probability and the second unassisted channel conversion probability. In some examples, the first and second unassisted channel conversion probabilities can be based on activity data as collected for the first and second contact, including the initial activity data collected during the holding period, additional activity data collected after the holding period, historical outcome data associated with each contact or a contact type of each contact, agent data, and any subset thereof.

The method 420 may further include collecting first agent data associated with the first contact; collecting second agent data associated with the second contact; updating the first unassisted channel conversion probability for the first contact based on the first agent data; and updating the second unassisted channel conversion probability for the second contact based on the second agent data.

The method 420 may include determining a first assisted channel conversion probability for the first contact based on the first initial activity data; determining a second assisted channel conversion probability for the second contact based on the second initial activity data, wherein the determining whether to divert at least one of the first contact and the second contact to the assisted channel is further based on the first assisted channel conversion probability and the second assisted channel conversion probability. In some examples, the first and second assisted channel conversion probabilities can be based on activity data as collected for the first and second contact, including the initial activity data collected during the holding period, additional activity data collected after the holding period, historical outcome data associated with each contact or a contact type of each contact, agent data associated with at least one agent of the contact center system, and any subset thereof.

The method 420 may include determining a target utilization of the at least one available agent, wherein determining whether to divert at least one of the first contact and the second contact to the assisted channel is further based on the target utilization.

The method 420 may include determining a plurality of measurements wherein each measurement corresponds to a unique combination of a set of contacts at either the assisted channel or the unassisted channel, wherein the set of contact comprises at least the first contact and the second contact; selecting at least one contact in the set of contacts for diversion based on the plurality of measurements; and determining to divert the selected contact.

The method 420 may include transmitting a message to the selected contact at the unassisted channel, wherein the message comprises instructions for the selected contact to access the assisted channel.

Although method 420 discusses monitoring and allocating multiple contacts between an unassisted web channel and an assisted voice channel, the present disclosure contemplates that similar monitoring and allocating as provided for in method 420 may be performed to monitor and allocate multiple contacts i) between multiple unassisted channels, ii) between multiple assisted channels, and iii) between one or more unassisted channels and one or more assisted channels.

### Additional Aspects of the Disclosure regarding Channel Optimization

Additional aspects that correspond to the above referenced disclosure are provided herein below. For example, in one aspect, a channel optimization method comprises directing a contact from an unassisted channel to an assisted channel.

The channel optimization method may be implemented by one or more processor(s) (e.g., processor(s) of call processing system 170 and/or channel monitoring and allocation runtime system 120). The channel optimization method may comprise an algorithm stored as computing instructions on a non-transitory computer-readable medium (e.g., a computer memory) coupled to the one or more processors. The instructions, when executed by the one or more processors, cause a communications system to implement the steps of the channel optimization method.

In various aspects, the channel optimization method includes obtaining initial activity data associated with a contact (e.g., contact 152) interacting with an unassisted channel (e.g., client website 154) of a service provider. In various aspects, the initial activity data may comprise at least one of: tracking data (e.g., cookies on client website 154 tracking the contact's activity), a number of interactions by the contact, and/or an interaction frequency of the contact with the unassisted channel. Additionally, or alternatively, the initial activity data of the contact may comprise at least one of: i) information about the contact during a predetermined period of time (e.g., thirty seconds or some other time period); and/or ii) a number of interactions of the contact on the unassisted channel.

In some aspects, channel optimization method may further comprise obtaining, by the one or more processors, contact connection data associated with the contact. The contact connection data may comprise activity of the contact on the unassisted channel of the service provider, a contact identifier, and/or a time of arrival on the unassisted channel.

The channel optimization method may further comprise determining, by the one or more processors, a contact intent corresponding to the contact based on the initial activity data. The contact intent may comprise an indication of a desired activity, action, and/or behavior of the contact as determined by the contact's user or interaction with the unassisted channle.

The channel optimization method may further comprise obtaining, by the one or more processors, agent data associated with a plurality of agents (e.g., any one or more of agents 190A-190D) servicing contacts on a plurality of assisted channels (e.g., telephone channel or chat channel) of a contact center system (e.g., call processing system 170) associated with the service provider. In various aspects, agent data may include at least one of: (i) an available agent value, (ii) an average handle time, (iii) a queue length, and/or (iv) an estimated wait time.

The channel optimization method may further comprise determining, by the one or more processors, a channel value associated with each assisted channel of the plurality of assisted channels based on the contact intent. In some aspects, determining the channel value may further comprise determining the channel value associated with each assisted channel of the plurality of assisted channels based on contact-specific data comprising the initial activity data and historical contact information associated with the contact. Additionally, or alternatively, determining the channel value may comprise determining a ranking for each assisted channel of the plurality of assisted channels based on the contact intent.

The channel optimization method may further comprise determining to direct the contact to at least one assisted channel of the plurality of assisted channels (e.g. telephone or chat) based on the channel value associated with each assisted channel and the agent data. In some aspects, this may comprise (1) determining a first channel value for the contact at a first assisted channel of the plurality of assisted channels; (2) determining a second channel value for the contact at the unassisted channel; (3) determining whether the first channel value is greater than the second channel value; and (4) determining to direct the contact to the first assisted channel based on determining that the first channel value is higher than the second channel value.

The channel optimization method may further comprise, based on determining to direct the contact to the at least one assisted channel of the service provider, transmitting, by the one or more processors, an electronic notification to a personal device of the contact. In various aspects, the assisted channel may comprise, by way of non-limiting example, any one or more of a web chat (e.g., conducted via a web chat interface), a telephone call, a text message thread, or the like.

In some aspects, after transmitting the electronic notification to the contact, the channel optimization method may further comprise obtaining a request from the personal device to establish an agent connection to the contact center system on one or more assisted channel(s). The channel optimization method may further include pairing, based on the request, the personal device of the contact to the contact center system, where the pairing establishes a communication between an agent of the plurality of agents and the contact via the one or more assisted channel(s).

### Additional Considerations

The present techniques may involve the processing of input data and the generation of output data to some extent. This input data processing and output data generation may be implemented in hardware or software. For example, specific electronic components may be employed in a behavioral pairing module or similar or related circuitry for implementing the functions associated with task assignment in accordance with the present disclosure as described above. Alternatively, one or more processors operating in accordance with instructions may implement the functions associated with task assignment in accordance with the present disclosure as described above. If such is the case, it is within the scope of the present disclosure that such instructions may be stored on one or more non-transitory processor readable storage media (*e.g*., a magnetic disk or other storage medium), or transmitted to one or more processors via one or more signals embodied in one or more carrier waves.

The description herein describes network elements, computers, and/or components that may include one or more modules. As used herein, the term "module" may be understood to refer to computing software, firmware, hardware, and/or various combinations thereof. Modules, however, are not to be interpreted as software which is not implemented on hardware, firmware, or recorded on a non-transitory processor readable recordable storage medium (*i.e*., modules are not software *per se*). It is noted that the modules are exemplary. The modules may be combined, integrated, separated, and/or duplicated to support various applications. Also, a function described herein as being performed at a particular module may be performed at one or more other modules and/or by one or more other devices instead of or in addition to the function performed at the particular module. Further, the modules may be implemented across multiple devices and/or other components local or remote to one another. Additionally, the modules may be moved from one device and added to another device, and/or may be included in both devices.

The present disclosure is not to be limited in scope by the specific aspects described herein. Indeed, other various aspects of and modifications to the present disclosure, in addition to those described herein, will be apparent to those of ordinary skill in the art from the foregoing description and accompanying drawings. Thus, such other aspects and modifications are intended to fall within the scope of the present disclosure. Further, although the present disclosure has been described herein in the context of at least one particular implementation in at least one particular environment for at least one particular purpose, those of ordinary skill in the art will recognize that its usefulness is not limited thereto and that the present disclosure may be beneficially implemented in any number of environments for any number of purposes. The scope of protection of the invention is defined by the appended claims.

## Claims

1. A method comprising:
obtaining (402) contact connection data associated with a contact at a first time, wherein the contact connection data comprises activity of the contact on an unassisted channel of a service provider;
obtaining (404) initial activity data associated with the contact interacting with the unassisted channel of the service provider, wherein the initial activity data comprises at least one of: i) information about the contact during a predetermined period of time after the first time; or ii) a number of interactions of the contact on the unassisted channel;
obtaining (406) agent data associated with a plurality of agents at a contact center system associated with the service provider;
determining (408) to direct the contact to at least one assisted channel of the service provider based on the initial activity data and the agent data;
based on determining to direct the contact to the at least one assisted channel of the service provider, transmitting (410) an electronic notification to a personal device of the contact;
after transmitting the electronic notification to the contact, obtaining (412) a request from a personal device to establish an agent connection to the contact center system on the at least one assisted channel; and
pairing (414), based on the request, a personal device of the contact to the contact center system,
wherein the pairing establishes a communication between an agent of the plurality of agents and the contact.

2. The method of claim 1, wherein the contact connection data comprises at least one of:
a contact identifier and a time of arrival.

3. The method of claim 1, wherein the initial activity data comprises at least one of:
website tracking data, a number of interactions by the contact, or an interaction frequency.

4. The method of claim 1, wherein the predetermined period of time is thirty seconds.

5. The method of claim 1, wherein determining whether to direct the contact to at least one assisted channel of the service provider is further based on an expected transfer rate for the contact.

6. The method of claim 5, wherein the expected transfer rate for the contact is based on the contact connection data and the initial activity data.

7. The method of claim 1, wherein the pairing is based on the initial activity data and the agent data.

8. A contact center system comprising one or more processors, said one or more processors configured to the method of any of claims 1 to 7.

9. A computer readable medium, that when executed on one or more processors causes the one or more processors to perform the method of any of claims 1 to 7.

## Patentansprüche

1. Verfahren, umfassend:
Erhalten (402) von Kontaktverbindungsdaten, die mit einem Kontakt zu einer ersten Zeit assoziiert sind, wobei die Kontaktverbindungsdaten eine Aktivität des Kontakts auf einem unassistierten Kanal eines Dienstanbieters umfassen;
Erhalten (404) von Initialaktivitätsdaten, die mit dem Kontakt assoziiert sind, der mit dem unassistierten Kanal des Dienstanbieters interagiert, wobei die Initialaktivitätsdaten mindestens eines von Folgendem umfassen: i) Informationen über den Kontakt während eines vorbestimmten Zeitraums nach der ersten Zeit; oder ii) eine Anzahl von Interaktionen des Kontakts auf dem unassistierten Kanal;
Erhalten (406) von Agentendaten, die mit einer Vielzahl von Agenten bei einem Contact-Center-System assoziiert sind, das mit dem Dienstanbieter assoziiert ist;
Bestimmen (408), den Kontakt an mindestens einen Hilfskanal des Dienstanbieters, basierend auf den Initialaktivitätsdaten und den Agentendaten, zu leiten;
basierend auf dem Bestimmen, den Kontakt an den mindestens einen Hilfskanal des Dienstanbieters zu leiten, Übertragen (410) einer elektronischen Benachrichtigung an ein persönliches Endgerät des Kontakts;
nach dem Übertragen der elektronischen Benachrichtigung an den Kontakt, Erhalten (412) einer Anforderung von einem persönlichen Endgerät, um eine Agentenverbindung zu dem Contact-Center-System auf dem mindestens einen Hilfskanal herzustellen; und
Kopplen (414), basierend auf der Anforderung, eines persönlichen Endgeräts des Kontakts mit dem Contact-Center-System,
wobei die Kopplung eine Kommunikation zwischen einem Agenten der Vielzahl von Agenten und dem Kontakt herstellt.

2. Verfahren nach Anspruch 1, wobei die Kontaktverbindungsdaten mindestens eines von Folgendem umfassen:
eine Kontaktkennung und eine Ankunftszeit.

3. Verfahren nach Anspruch 1, wobei die Initialaktivitätsdaten mindestens eines von Folgendem umfassen:
Website-Tracking-Daten, eine Anzahl von Interaktionen durch den Kontakt oder eine Interaktionshäufigkeit.

4. Verfahren nach Anspruch 1, wobei der vorbestimmte Zeitraum dreißig Sekunden beträgt.

5. Verfahren nach Anspruch 1, wobei das Bestimmen, ob der Kontakt an mindestens einen Hilfskanal des Dienstanbieters geleitet werden soll, weiter basierend auf einer erwarteten Übergangsrate für den Kontakt erfolgt.

6. Verfahren nach Anspruch 5, wobei die erwartete Übergangsrate für den Kontakt auf den Kontaktverbindungsdaten und den Initialaktivitätsdaten basiert.

7. Verfahren nach Anspruch 1, wobei die Kopplung auf den Initialaktivitätsdaten und den Agentendaten basiert.

8. Contact-Center-System, umfassend einen oder mehrere Prozessoren, wobei der eine oder die mehreren Prozessoren für das Verfahren nach einem der Ansprüche 1 bis 7 konfiguriert sind.

9. Computerlesbares Medium, das, wenn es auf einem oder mehreren Prozessoren ausgeführt wird, den einen oder die mehreren Prozessoren veranlasst, das Verfahren nach einem der Ansprüche 1 bis 7 durchzuführen.

## Revendications

1. Procédé comprenant :
l'obtention (402) de données de connexion de contact associées à un contact à un premier instant, dans lequel les données de connexion de contact comprennent une activité du contact sur un canal non assisté d'un fournisseur de services ;
l'obtention (404) de données d'activité initiale associées au contact interagissant avec le canal non assisté du fournisseur de services, dans lequel les données d'activité initiale comprennent au moins un élément parmi : i) des informations concernant le contact pendant une période de temps prédéterminée après le premier instant ; ou ii) un nombre d'interactions du contact sur le canal non assisté ;
l'obtention (406) de données d'agent associées à une pluralité d'agents dans un système de centre de contact associé au fournisseur de services ;
la détermination (408) du fait de diriger le contact vers au moins un canal assisté du fournisseur de services sur la base des données d'activité initiale et des données d'agent ;
sur la base de la détermination du fait de diriger le contact vers l'au moins un canal assisté du fournisseur de services, la transmission (410) d'une notification électronique à un dispositif personnel du contact ;
après transmission de la notification électronique au contact, l'obtention (412) d'une demande à partir d'un dispositif personnel pour établir une connexion avec un agent vers le système de centre de contact sur l'au moins un canal assisté ; et un appariement (414), sur la base de la demande, d'un dispositif personnel du contact au système de centre de contact,
dans lequel l'appariement établit une communication entre un agent de la pluralité d'agents et le contact.

2. Procédé selon la revendication 1, dans lequel les données de connexion de contact comprennent au moins un élément parmi :
un identifiant de contact et une heure d'arrivée.

3. Procédé selon la revendication 1, dans lequel les données d'activité initiale comprennent au moins un élément parmi :
des données de suivi de site Web, un nombre d'interactions par le contact, ou une fréquence d'interaction.

4. Procédé selon la revendication 1, dans lequel la période de temps prédéterminée est de trente secondes.

5. Procédé selon la revendication 1, dans lequel la détermination de s'il faut diriger le contact vers au moins un canal assisté du fournisseur de services est en outre basée sur un taux de transfert attendu pour le contact.

6. Procédé selon la revendication 5, dans lequel le taux de transfert attendu pour le contact est basé sur les données de connexion de contact et les données d'activité initiale.

7. Procédé selon la revendication 1, dans lequel l'appariement est basé sur les données d'activité initiale et les données d'agent.

8. Système de centre de contact comprenant un ou plusieurs processeurs, lesdits un ou plusieurs processeurs configurés pour le procédé selon l'une quelconque des revendications 1 à 7.

9. Support lisible par processeur, qui, lorsqu'il est exécuté sur un ou plusieurs processeurs, amène les un ou plusieurs processeurs à effectuer le procédé selon l'une quelconque des revendications 1 à 7.
